# EUROPÄISCHE PATENTSCHRIFT

(11) **EP 1 964 473 B1**
(45) Veröffentlichungstag und Bekanntmachung des Hinweises auf die Patenterteilung: **30.06.2010**
(21) Anmeldenummer: 08101209.8
(22) Anmeldetag: 01.02.2008
(51) Int. Cl.: A21D 13/00

(54) **Vorrichtung und Verfahren zur kontinuierlichen Herstellung flacher Backwaren**
Method and device for continuous production of flat baked goods
Procédé et dispositif destinés à la fabrication continue de produits cuits plats

(30) Priorität: 05.02.2007 DE 102007006395
(43) Veröffentlichungstag der Anmeldung: 03.09.2008
(73) Patentinhaber: Dr. AUGUST OETKER NAHRUNGSMITTEL KG, 33617 Bielefeld (DE)
(72) Erfinder: Dr. Spiegel, Udo, 33619, Bielefeld (DE); Siekerkotte, Ralf, 33659, Bielefeld (DE)
(74) Vertreter: Taruttis, Stefan Georg

(56) Entgegenhaltungen:
- GB-A- 2 165 436
- US-A- 3 892 868
- US-A- 5 795 607

## Beschreibung

Die vorliegende Erfindung betrifft eine Vorrichtung und ein Verfahren zur Herstellung flacher Backwaren, insbesondere aus Hefeteig, die z.B. einen Pizzaboden für eine Pizza bilden können.

Zur Erzeugung einer vom Verbraucher gewünschten Teigstruktur, die einen so genannten kurzen Biss aufweist, d.h. eine leicht brüchige Krume, ist erfindungsgemäß vorgesehen, einen flachen Teigling nach dem Backvorgang einer Kompression auszusetzen.

### Stand der Technik

Aus der GB 2 165 436 A1 ist bekannt, eine flache Backware, nämlich einen Pizzaboden für eine Pizza, dadurch herzustellen, dass zunächst ein Hefeteig in eine flache Form eingebracht wird. Der Hefeteig wird in der Form bei 30 bis 41 °C und 65 bis 72% Luftfeuchtigkeit für 25 bis 95 min gehen gelassen. Anschließend wird der Teig von einem Stempel mit wenigstens 1,3 kN gepresst, bevor er in einem Ofen gebacken wird. Als Alternative zum Pressen des gegangenen Teigs vor dem Backen kann der Teig mit demselben Druck nach dem Backen durch den Stempel gepresst werden.

Die DE 199 43 239 C1 beschreibt ein mindestens dreiphasiges Backverfahren zur Herstellung schalenförmiger Backwaren, bei dem Teig während des Backens zwischen einer konkaven Unterschale und einer konvexen Oberschale gehalten wird, deren Abstand während des Backens verändert wird. Nach einer anfänglichen Formgebungsphase des Backens wird der Abstand der Ober- und Unterschale vergrößert, um drucklos zu backen, während der Teig gegen Ende des Backvorgangs zwischen Ober- und Unterschale komprimiert wird.

Die EP 0 687 413 A1 beschreibt, dass ein Pizzaboden, der durch Pressen einer Teigportion auf einer Unterlage geformt ist, durch anschließendes Kühlen oder Tiefkühlen leichter von der Unterlage entfernbar ist, und die gekühlte bzw. tiefgekühlte gepresste Teigplatte nach dem Entfernen von der Unterlage gebacken wird.

Der Stand der Technik verweist darauf, dass die gewünschte Teigstruktur mit kurzem Biss, die auch als ähnlich einem Nudelteig bezeichnet wird, dadurch erzeugt wird, dass die Struktur des Hefeteigs durch schnelles Pressen mittels eines Stempels zerstört wird.

Die aus dem Stand der Technik bekannten Verfahren zur Herstellung flacher Backwaren, insbesondere von Pizzaböden sind darin nachteilig, dass das Pressen einer Portion Hefeteig in eine Form in einem schnellen Preßvorgang bei hohem Preßdruck mit einem Stempel erfolgt, um die gewünschte Teigstruktur mit kurzem Biss zu erhalten. Denn diese Stempelverfahren sind in der Praxis nicht für flache Backwaren, insbesondere für Pizzaböden, vorzugsweise aus Hefeteig, geeignet, die einen verhältnismäßig kleinen Durchmesser aufweisen.

### Aufgabe der Erfindung

Aufgabe der Erfindung ist es, eine alternative Vorrichtung und ein alternatives Verfahren zur Herstellung flacher Backwaren, insbesondere von Pizzaböden bereitzustellen, die zur Herstellung flacher Backwaren mit einem kleinen Durchmesser, beispielsweise im Bereich von 3 bis 30 cm, vorzugsweise von 5 bis 15 cm Durchmesser geeignet sind.

### Allgemeine Beschreibung der Erfindung

Erfindungsgemäß ist vorgesehen, durch das Verfahren zur Herstellung flacher Backwaren, insbesondere von Pizzaböden, rohe Teiglinge herzustellen, die anschließend gebacken und kontinuierlich über die gesamte Fläche komprimiert werden. Das Backen erfolgt dabei nach Temperatur und Dauer vorzugsweise bis zum Erreichen von mindestens 50%, bevorzugter bis mindestens 75 - 95%, besonders bevorzugt bis 100% des vollständig ausgebackenen Zustands. In einer bevorzugten Ausführungsform ist vorgesehen, die rohen Teiglinge durch Auswalzen auf einer ersten Unterlage, z.B. einem ersten Transportband, herzustellen, wobei deren Umfang durch Ausstanzen festgelegt wird. Anschließend ist vorgesehen, ausgewalzten Teig außerhalb der jeweiligen Umfangslinien ausgestanzter Teiglinge zu entfernen, die Teiglinge zu backen und dann kontinuierlich mittels einer Kompressionswalze zu komprimieren, die in einem Abstand zu einer Kompressionsunterlage angeordnet ist, wobei der Abstand gleich dem Spalt zwischen Kompressionswalze und Kompressionsunterlage sein kann. Der Abstand der Kompressionswalze zur Kompressionsunterlage beträgt vorzugsweise 90 bis 20%, besonders bevorzugt 75 bis 25% der Dicke der gebackenen Teiglinge, um diese auf 90% bis 20%, bevorzugt 75% bis 25% ihrer Dicke zu reduzieren.

Die Kompressionsunterlage ist für den kontinuierlichen Transport der Teiglinge durch den Spalt zwischen Kompressionsunterlage und Kompressionswalze eingerichtet und kann in einer einfachen Ausführungsform eine vorzugsweise schiefe Ebene mit einer Oberfläche sein, auf der die gebackenen Teiglinge an die Kompressionswalze und unter dieser hindurch rutschen.

Bevorzugt ist die Kompressionsunterlage ein zweites Transportband, wobei die Achse der Kompressionswalze parallel zu dessen Ebene angeordnet ist. Weiter bevorzugt ist die Kompressionsunterlage eine Unterwalze, die besonders bevorzugt achsparallel zur Kompressionswalze angeordnet ist.

Überraschenderweise hat sich herausgestellt, dass mit dem erfindungsgemäßen Verfahren, das mit der erfindungsgemäßen Vorrichtung durchführbar ist, flache Backwaren hergestellt werden können, die eine Teigstruktur mit kurzem Biss aufweisen, wobei vorteilhafterweise keine separaten Backträger für die Teiglinge und keine Preßstempel erforderlich sind.

Es ist bevorzugt, dass das erfindungsgemäße Verfahren kontinuierlich durchgeführt wird, so dass auf einer ersten Unterlage bereitgestellte rohe Teigling, z.B. ausgerollte und ausgestanzte Teiglinge zwischen denen Teig außerhalb der Umfangslinien entfernt wurde, kontinuierlich einen Ofen durchlaufen und anschließend kontinuierlich zwischen der Kompressionsunterlage und der drehbar und in einem Abstand dazu angeordneten Kompressionswalze komprimiert werden. Besonders bevorzugt wird das Verfahren so durchgeführt, dass die Teiglinge unmittelbar nach dem Backen zwischen der Kompressionsunterlage und der Kompressionswalze kontinuierlich komprimiert werden, z.B. wenn die Teiglinge noch eine Temperatur von ca. 60 bis 300 °C, vorzugsweise bis 110 °C aufweisen.

Die Vorrichtung zur Verwendung im erfindungsgemäßen Verfahren weist entsprechend eine Einrichtung zur Bereitstellung vorgeformte Teiglinge auf, einen anschließend angeordneten Ofen, der eine zum kontinuierlichen Transport der Teiglinge eingerichtete Backunterlage aufweist, sowie eine drehbare Kompressionswalze mit einer dazu beanstandeten Kompressionsunterlage, die nachfolgend an den Ofen, d.h. z.B. am Ende der Backunterlage angeordnet ist.

Als Alternative zur Anordnung von Kompressionswalze und Kompressionsunterlage angrenzend an den Ofen ist es möglich, die gebackenen Teiglinge abkühlen zu lassen und einzufrieren oder unmittelbar durch eine Kühleinrichung, z.B. einen Schockkühler oder Schockgefierer, zu kühlen bzw. zu gefrieren und anschließend im gekühlten Zustand zu komprimieren.

Die erste Unterlage, auf der die rohen Teiglinge durch Auswalzen und Ausstanzen geformt werden, kann ein erstes Transportband sein, so dass keine besonderen Backgutträger erforderlich sind, auf denen die geformten Teiglinge jeweils separat anzuordnen wären.

Dabei weist diese Ausführungsform des erfindungsgemäßen Verfahrens den Vorteil auf, dass durch das Auswalzen und Ausstanzen der Teiglinge auf einer ersten Unterlage eine im Verhältnis zu den bekannten Pressverfahren geringe Anhaftung der Teiglinge auf der ersten Unterlage erzeugt wird. In der Folge können die Teiglinge kontinuierlich von der ersten Unterlage auf eine Backunterlage übertragen werden, die die Teiglinge kontinuierlich zum vollständigen oder teilweisen Backen durch einen Ofen transportiert. Eine solche Backunterlage kann beispielsweise ein Transportband ohne oder mit Durchbrechungen sein, z.B. ein Netz- oder Gittertransportband.

Zur Erleichterung des Ablösevorgangs von der ersten Unterlage kann vorgesehen sein, die ausgewalzten und ausgestanzten Teiglinge auf der ersten Unterlage zu kühlen oder zu gefrieren.

Bei Ausführung der Kompressionsunterlage als zweites Transportband hat dieses vorzugsweise eine im Wesentlichen ebene Oberfläche, um den gebackenen Teigling während des Komprimierens durch die Kompressionswalze möglichst vollflächig zu unterstützen.

Alternativ kann vorgesehen sein, dass ein zweites Transportband Ausnehmungen oder Durchbrechungen innerhalb einer ansonsten ebenen Oberfläche aufweist, wobei die Ausnehmungen oder Durchbrechungen vorzugsweise einen maximalen Durchmesser von 1 bis 10 mm aufweisen und maximal 5 bis 30% der Fläche der zweiten Unterlage einnehmen.

In Ausführungsformen, in denen die gebackenen Teiglinge auf einer Unterwalze als Kompressionsunterlage gegen die Kompressionswalze geführt werden, ist es bevorzugt, dass die Unterwalze eine in sich geschlossene Zylindermantelfläche aufweist, deren Radius im Bereich von 1,5 - 50 cm, vorzugsweise von 3 - 40 cm beträgt. Die Kompressionswalze mit der gegenüber angeordneten Unterwalze kann im Verhältnis zu einem Transportband, beispielsweise einer Backunterlage, so angeordnet sein, dass die gebackenen Teiglinge im Wesentlichen in der Ebene des Transportbands zwischen Kompressionswalze und Unterwalze durchgeführt werden, d.h., dass der Spalt zwischen Kompressionswalze und Unterwalze im Wesentlichen in der Ebene eines Transportbands angeordnet ist, das beispielsweise waagerecht liegt.

Der Radius der Kompressionswalze kann in jeder Ausführungsform 1,5 - 50 cm, vorzugsweise von 3 - 40 cm betragen.

Alternativ können die Kompressionswalze und die ihr gegenüberliegend achsparallel zugeordnete Unterwalze so im Verhältnis zu dem Transportband, das die gebackenen Teiglinge zuführt, angeordnet sein, dass ihre Abstandslinie in einem Winkel zur Senkrechten bis hin zur Waagerechten angeordnet ist, und der Spalt zwischen Kompressionswalze und Unterwalze unterhalb der Ebene des Transportbands liegt. Auf diese Weise können gebackene Teiglinge, die in den Spalt zwischen der Walze und der Unterwalze durch das Transportband gefördert werden, am Ende eines Transportbands über dessen Umlenkrolle kippen und in den Spalt zwischen Walze und Unterwalze eintreten.

Zum weiteren Transport der gebackenen Teiglinge im Anschluss an die Kompression zwischen Kompressionswalze und Unterwalze ist es bevorzugt, dass sich ein weiteres Transportband zum Abtransport der Teiglinge anschließt.

In Alternative zu der Ausführung des Transportwegs der Teiglinge in Form von mindestens einer ersten, kontinuierlich antreibbaren ersten Unterlage, einer anschließenden, ebenfalls kontinuierlich antreibbaren Backunterlage mit wiederum anschließender, ebenfalls kontinuierlich antreibbaren zweiten Transportband, oberhalb dessen die beabstandete Kompressionswalze angeordnet ist, können jeweils zwei oder mehr benachbarte Unterlagen von einem durchgängigen Transportband gebildet werden. Bei Ausführungsformen, in denen die erste Unterlage und die Backunterlage und/oder die Backunterlage und die Kompressionsunterlage jeweils von einem durchgehenden, antreibbaren Transportband gebildet werden, liegt ein Vorteil darin, dass die Übertragung der Teiglinge von einer Unterlage zur nächsten weniger häufig bzw. nicht vor dem Pressvorgang zwischen dem zweiten Transportband und der Kompressionswalze erfolgen muss. Auf diese Weise werden Probleme mit möglicherweise zu hoher Anhaftung der Teiglinge auf den jeweils kontinuierlich antreibbaren Unterlagen, auf denen sie gemeinsam angeordnet sind, vermieden. Das Ablösen der Teiglinge nach Durchlaufen des Kompressionsvorgangs zwischen Kompressionsunterlage und Kompressionswalze ist verhältnismäßig unkritisch, weil die gebackenen und gepreßten Teiglinge eine ausreichende Formstabilität haben und verhältnismäßig wenig an der Kompressionsunterlage anhaften, so dass eine Ablösung einfach möglich ist.

Für das erfindungsgemäße Verfahren ist es bevorzugt, dass die gebackenen Teiglinge unmittelbar im Anschluss an das Backen komprimiert werden. Entsprechend ist es bevorzugt, dass die Walze mit gegenüberliegend angeordneter Kompressionsunterlage unmittelbar an den oder in einem kurzen Abstand zum Ofen angeordnet sind, sodass ein Kühlen der Teiglinge im Wesentlichen vermieden wird.

Das erfindungsgemäße Verfahren erlaubt es, mit verhältnismäßig geringem maschinellen Aufwand flache Backwaren, insbesondere gebackene Pizzaböden mit kleinem Durchmesser, kontinuierlich oder satzweise herzustellen, die eine Teigstruktur mit kurzen Biss aufweisen. Die erfindungsgemäße Vorrichtung erlaubt auch die kontinuierliche Produktion eines gebackenen Teiglings, der als unendliche Schicht auf einer Backunterlage gebacken ist, um einen durchgängigen Teigling mit der gewünschten Teigstruktur zu erhalten. Bei einem solchen durchgängigen und quasi unendlichen Teigling wird vorzugsweise eine Einrichtung zur Portionierung, z.B. eine Schneid- oder Stanzeinrichtung, vor oder nach der Kompressionswalze angeordnet, um verkaufsfähige Portionen zu erzeugen.

Erfindungsgemäß ist es bevorzugt, dass die gebackenen Teiglinge nach dem Backen durch die Kompression um 10 bis 80%, vorzugsweise um 25 bis 75% ihrer Höhe reduziert werden. Entsprechend ist es bevorzugt, dass der Spalt zwischen der Walze und der Kompressionsunterlage 90 bis 20%, vorzugsweise 75 bis 25% der Dicke der gebackenen Teiglinge beträgt.

Eine erfindungsgemäße Vorrichtung ist entsprechend des damit durchzuführenden Verfahrens eingerichtet, die vorliegend beschriebenen Verfahrensschritte auszuführen.

### Genaue Beschreibung der Erfindung

Die Erfindung wird nun genauer mit Bezug auf die Figuren beschrieben, in denen
- Figur 1 eine schematische Übersicht über eine Vorrichtung zeigt, mit der das erfindungsgemäße Verfahren durchführbar ist,
- Figur 2 schematisch eine erfindungsgemäße Vorrichtung zeigt,
- Figuren 3A und 3B schematisch weitere bevorzugte Ausführungsformen der Erfindung zeigen und
- Figur 4 schematisch abschnittsweise eine weitere alternative erfindungsgemäße Vorrichtung zeigt.

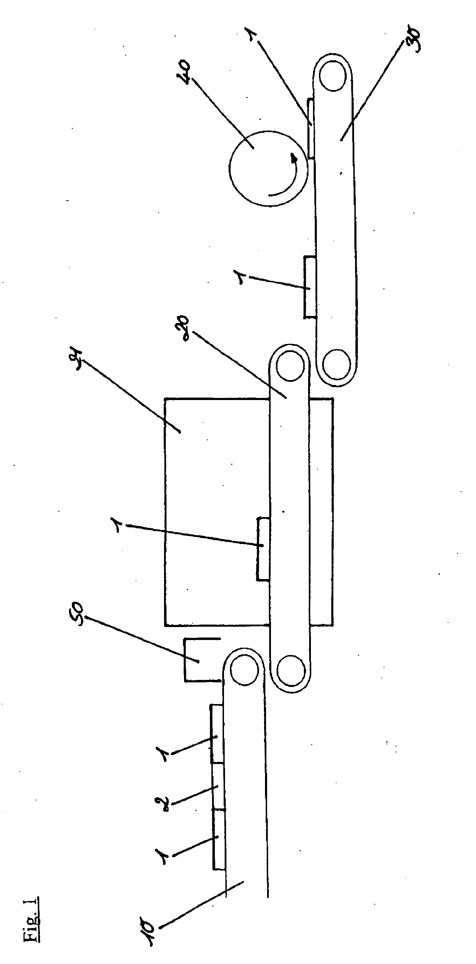

Allgemein ist in Figur 1 dargestellt, dass ein Teigling 1 durch Auswalzen oder Rollen eines vorbereiteten Teigs, vorzugsweise eines Hefeteigs, auf eine erste Unterlage 10 in dünner Schicht aufgebracht wird, beispielsweise in einer Schichtdicke von 5 bis 15 mm. Der Umfang des Teiglings 1 wird durch Ausstanzen oder Ausschneiden auf der Unterlage 10 festgelegt, wobei die außerhalb der Umfänge der Teiglinge 1 verbleibenden Teigreste 2 entfernt werden, beispielsweise durch Abziehen der Teigreste 2 von der ersten Unterlage 10. Auf diese Weise werden auf der ersten Unterlage 10 durch Auswalzen, Ausstanzen und Entfernen von Teig 2 zwischen den Teiglingen 1 voneinander beabstandete rohe Teiglinge 1 erzeugt, die außer dem zum Auswalzen erforderlichen Druck keinem Pressdruck ausgesetzt sind und die gemeinsam auf einer durchgängigen ersten Unterlage 10 angeordnet sind.

Die erste Unterlage 10 ist umlaufend antreibbar, z.B. in Form eines um zwei beabstandete parallele Achsen angeordneten Transportbands, und weist eine im Wesentlichen geschlossene Oberfläche auf, so dass beim Auswalzen und Ausstanzen der Teiglinge 1 kein Teig in Vertiefungen oder Durchbrechungen der ersten Unterlage 10 eindringen kann. Neben einer im Wesentlichen ebenen Oberfläche kann die erste Unterlage 10 Vertiefungen, Erhöhungen oder Riffelungen aufweisen, beispielsweise mit einer Erstreckung von bis zu 1 mm, vorzugsweise bis zu 0,5 mm.

Die ausgestanzten Teiglinge können kontinuierlich oder chargenweise in einer Einrichtung zur Gärung gehen gelassen werden, z.B. für 15 bis 95 min bei einer Temperatur von 30 °C bis 41 °C und 60 bis 80 % Luftfeuchtigkeit. Zusätzlich oder alternativ können die Teiglinge mittels einer Einrichtung zum Stipfeln gestipfelt werden.

Von der ersten Unterlage 10 werden die Teiglinge 1 vorzugsweise kontinuierlich auf eine Backunterlage 20 transportiert, die umlaufend antreibbar und so abschnittsweise innerhalb eines Ofens 21 angeordnet ist, dass die Teiglinge 1 kontinuierlich hineintransportiert, gebacken und heraustransportiert werden können. Die Backunterlage 20 kann zur Optimierung der Wärmeeinwirkung auf die Teiglinge 1 Durchbrechungen aufweisen, beispielsweise in Form eines Gitter- oder Netzbandes ausgeführt sein.

Für ein erfindungsgemäßes kontinuierliches Verfahren kann vorgesehen sein, dass die rohen Teiglinge 1 kontinuierlich durch Auswalzen und Ausstanzen auf der ersten Unterlage 10 hergestellt werden, und anschließend kontinuierlich durch einen Ofen 21 geführt werden, ohne dass ausreichend Zeit für eine Fermentation der hergestellten rohen Teiglinge 1 auf der ersten Unterlage 10 eingehalten würde, beispielsweise durch Backen der Teiglinge 1 innerhalb von weniger als 5 min, vorzugsweise weniger als 2 min, besonders bevorzugt innerhalb weniger als 1 min im Anschluss an das Auswalzen und Ausstanzen der Teiglinge 1 auf der ersten Unterlage 10. Für ein kontinuierliches Verfahren, bei dem die Teiglinge nach dem Ausstanzen gehen gelassen werden, ist die Vorrichtung mit einer kontinuierlich arbeitenden Einrichtung zur Gärung der Teiglinge versehen, die z.B. im Anschluß an die Einrichtung zum Ausstanzen angeordnet ist.

Zwischen der Einrichtung zum Ausstanzen und dem Ofen 21 kann eine Kühleinrichtung 50 angeordnet sein, um die Teiglinge zur Erleichterung des Ablösens von der ersten Unterlage 10 zu kühlen oder einzufrieren.

Der Ofen 21 hält vorzugsweise eine Temperatur im Bereich zwischen 225 °C bis 400 °C und die Backunterlage 20 ist beispielsweise so eingerichtet, dass ihre Transportgeschwindigkeit durch den Ofen 21 eine Verweildauer der Teiglinge 1 im Ofen 21 von ca. 1 bis 5 min einstellt.

Nach Austritt aus dem Ofen 21 werden die gebackenen Teiglinge 1 zwischen die Kompressionsunterlage, hier ein zweites Transportband 30, und eine beabstandete Kompressionswalze 40 geführt und dort kontinuierlich auf die Höhe des Spalts zwischen diesen komprimiert. Die Kompressionswalze 40 ist unter Federspannung und/oder in einem festen Abstand von 2 bis 14 mm, vorzugsweise 3 bis 8 mm gegen die Kompressionsunterlage drehbar gelagert, so dass gebackene Teiglinge 1 auf eine Dicke von ca. 2 bis 14 mm, vorzugsweise 3 bis 8 mm komprimiert werden. Dabei ist es bevorzugt, dass die gebackenen Teiglinge unmittelbar im Anschluß an den Durchtritt durch den Ofen 21 komprimiert werden, z.B. wenn sie noch eine Temperatur von 120 °C bis 70 °C aufweisen.

Wahlweise kann zwischen dem Ofen 21 und der Kompressionswalze mit beabstandeter Kompressionsunterlage eine Kühleinrichtung (nicht dargestellt) angeordnet sein, um die Teiglinge zur Erhöhung der Effizienz des Komprimierens zu kühlen oder einzufrieren.

Als Alternative zur Fixierung der Kompressionswalze 40 in einem festgelegten Abstand zur Oberfläche der Kompressionsunterlage kann die Kompressionswalze 40 in einem festgelegten minimalen Abstand unter Federspannung gegen die Kompressionsunterlage 30 angeordnet sein. Als Alternative zu einer Federspannung kann die Gewichtskraft der Kompressionswalze 40 ausgenutzt werden, um einen annähernd kontinuierlichen Druck auf die gebackenen Teiglinge 1 auszuüben.

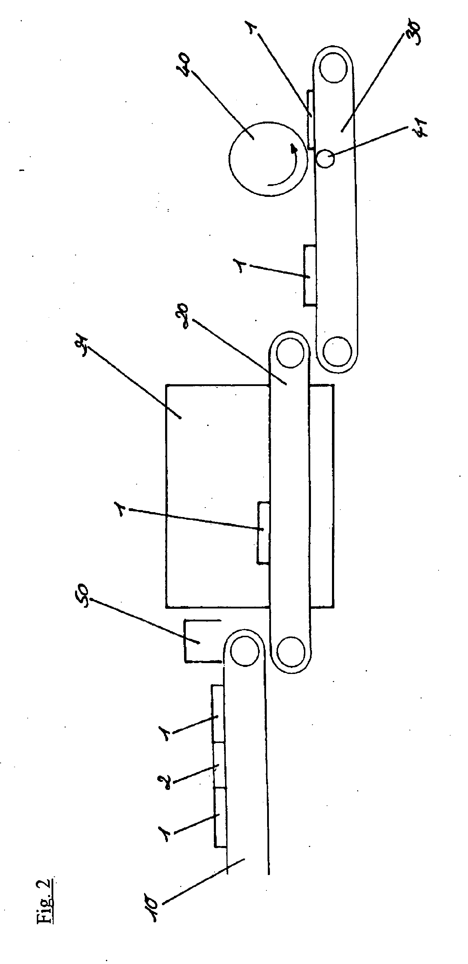

In Figur 2 ist eine alternative Ausführungsform der erfindungsgemäßen Vorrichtung dargestellt, bei der der Kompressionswalze 40 achsparallel gegenüber eine zweite Walze 41 angeordnet ist. Die zweite Walze 41 ist vorzugsweise angrenzend an die Oberfläche des zweiten Transportbands 30 angeordnet, die der Kompressionswalze 40 gegenüber liegt. In dieser Ausführungsform werden die gebackenen Teiglinge 1 zwischen dem zweiten Transportband 30 und der Kompressionswalze 40 komprimiert, wobei Abstand und/oder Druck zwischen dem zweiten Transportband 30 und der Kompressionswalze 40 durch die zweite Walze 41 einstellbar ist.

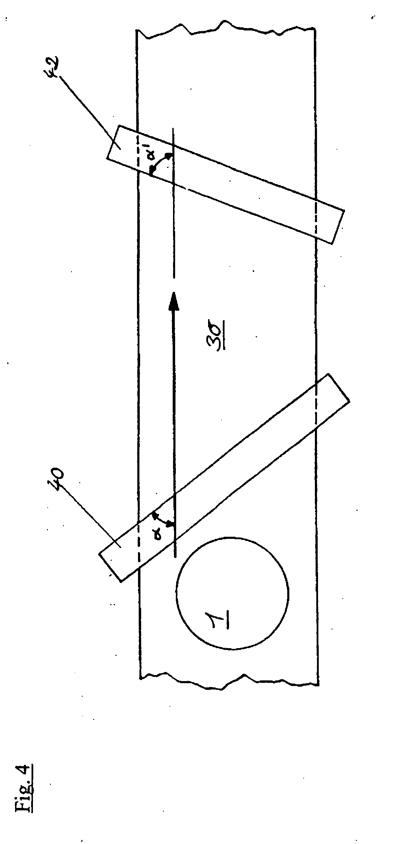

Die Kompressionswalze 40, optional in Kombination mit einer achsparallel beabstandet angeordneten zweiten Walze 41, kann mit ihrer Achse in einem Winkel α < 90° gegen die Transportrichtung des zweiten Transportbands 30 angeordnet sein, wie schematisch in Figur 4 dargestellt ist. Durch Anordnung der Kompressionswalze 40 in einem Winkel α < 90° zur Transportrichtung des zweiten Transportbands 30 werden die Oberflächen des Teiglings 1 zusätzlich zum Komprimieren zwischen der Kompressionsunterlage und der Kompressionswalze 40 unterschiedlich gezogen, was die Teigstruktur günstig beeinflussen kann. Denn die Anordnung der Kompressionswalze 40 in einem Winkel α < 90° in Bezug auf die Transportrichtung des zweiten Transportbands 30 führt zu einem Scheren der Oberflächen des Teiglings 1 gegeneinander, die mit dem zweiten Transportband 30 bzw. der Kompressionswalze 40 in Kontakt stehen. Der Winkel α kann z.B. als Winkel der Achse der Kompressionswalze 40 gegen die Senkrechte zur Achse einer Umlenkrolle bestimmt werden, um die das zweite Transportband 30 geführt wird. Der Winkel α der Achse der Kompressionswalze 40 zur Transportrichtung des zweiten Transportbands 30 kann von 45° bis 85° betragen, vorzugsweise von 60° bis 80°.

Wie in Figur 4 gezeigt, kann Fortbildung dieser Ausführungsform eine zweite Kompressionswalze 42, optional wiederum mit einer gegenüberliegend achsparallel angeordneten Gegenwalze (nicht dargestellt), in einem Winkel α' zur Transportrichtung des zweiten Transportbands 30 und in einem Abstand zur Kompressionswalze 40 und zum zweiten Transportband 30 beabstandet angeordnet sein. Der Winkel α', in dem die zweite Kompressionswalze 42 gegen die Transportrichtung des zweiten Transportbands 30 angeordnet ist, kann vom Winkel α der Kompressionswalze 40 abweichen. Der Winkel α' kann gegen den Winkel α angeordnet sein, so dass die Kompressionswalze 40 und die zweite Kompressionswalze 42 V-förmig angeordnet sind. Bei V-förmiger Anordnung wird der gebackene Teigling in entgegengesetzte Richtungen geschert, was die Teigstruktur günstig beeinflussen kann. Auch der Winkel α' kann gegen die Senkrechte zur Achse einer Umlenkrolle bestimmt werden, um die das zweite Transportband 30 geführt ist.

Vorzugsweise sind die Kompressionswalze 40, eine zweite Walze 41, eine zweite Kompressionswalze 42 und eine dieser beabstandet zugeordnete Gegenwalze gesteuert und/oder geregelt antreibbar.

Die Umfangsgeschwindigkeit der Kompressionswalzen 40 bzw. 42 kann von 4 bis 20 mm/min betragen.

Für den Fall, dass die Kompressionsunterlage eine ortsfeste schiefe Ebene mit einer Abwärtsneigung zum Spalt mit der Kompressionswalze ist und eine Oberfläche aufweist, die das Rutschen der gebackenen Teiglinge ermöglicht, reicht es aus, wenn die Kompressionswalze antreibbar ist, um die Teiglinge über die Kompressionsunterlage durch den Spalt zu fördern.

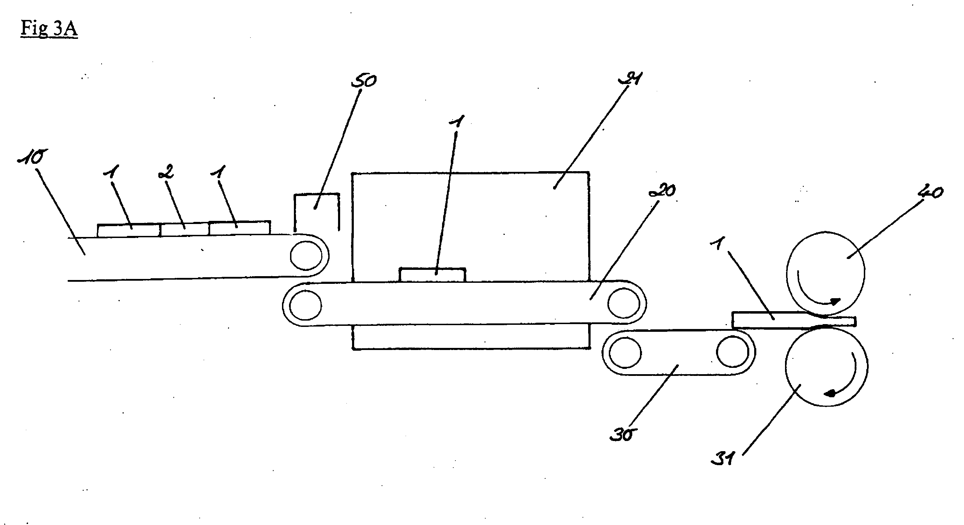

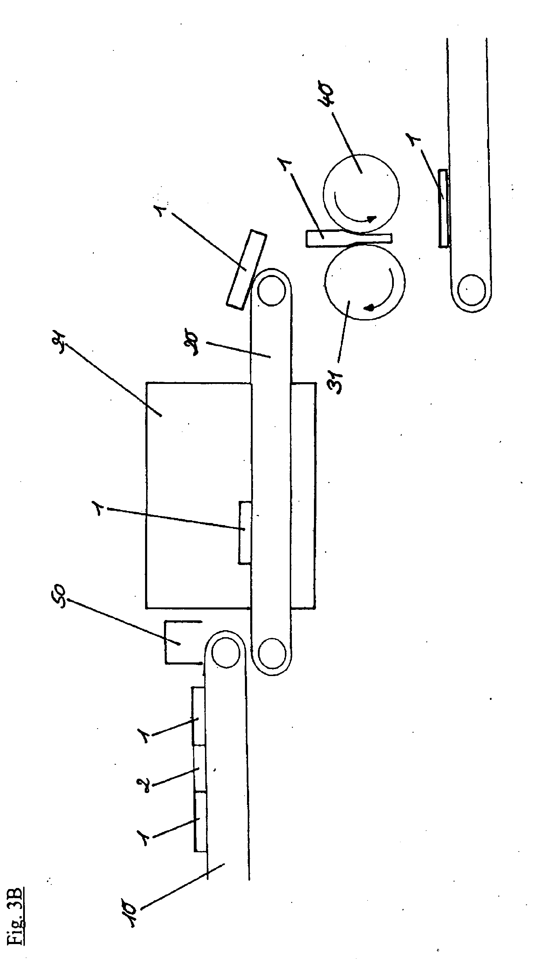

Bei Ausführung der Kompressionsunterlage als zweites Transportband 30 oder Unterwalze 31, wie mit Bezug auf die Figuren 3A und 3B beschrieben, kann deren Oberflächengeschwindigkeit mit der der Kompressionswalze 40 übereinstimmen oder von dieser abweichen. Dazu ist die Kompressionswalze 40 gesteuert und/oder geregelt antreibbar und auf eine Umfangsgeschwindigkeit einstellbar, die von der Transportgeschwindigkeit des zweiten Transportbands 30 bzw. von der Umfangsgeschwindigkeit der Unterwalze 31 abweicht. Das Verhältnis der Umfangsgeschwindigkeit der Kompressionswalze 40 zur Transportgeschwindigkeit des zweiten Transportbands 30 bzw. zur Umfangsgeschwindigkeit der Unterwalze 31 ist vorzugsweise auf 1:1,05 bis 1:1,2 oder 1,05:1 bis 1,2:1 einstellbar.

Die Kompressionsunterlage kann durch eine Unterwalze 31 anstelle des zweiten Transportbands 30 gebildet werden, wie in Figuren 3A und 3B dargestellt ist. Die Achse der Unterwalze 31 ist vorzugsweise senkrecht zur Transportrichtung der Transporteinrichtung für die Teiglinge 1. Die Achse der Unterwalze 31 kann so angeordnet sein, dass der Abschnitt ihrer Umfangsfläche, der der Kompressionswalze benachbart ist, in einer Ebene mit der Transporteinrichtung oder unterhalb dieser Ebene ist. Für diese Anordnung kann die Achse der Unterwalze mindestens um den Betrag ihres Radius von der Ebene der Transporteinrichtung beabstandet sein.

Diese Ausführungsformen sind schematisch in Figuren 3A und 3B dargestellt, wobei in Figur 3 A die Transporteinrichtung für Teiglinge 1 eingerichtet ist, die Teiglinge 1 bis vor den Spalt zwischen Kompressionswalze 40 und Unterwalze 31 zu transportieren. Wie in Figur 3B dargestellt ist, kann diese Transporteinrichtung auch von der Backunterlage 20 gebildet werden. Gegenüber der Transporteinrichtung schließt sich an die einander gegenüberliegend angeordnete Kompressionswalze 40 und Unterwalze 31 eine weitere Transporteinrichtung zum Abtransport der nun gepreßten Teiglinge 1 an.

Figur 3A zeigt die Anordnung von Kompressionswalze 40 und Unterwalze 31, in der der Spalt zwischen Kompressionswalze 40 und Unterwalze 31 etwa in der Ebene der Transporteinrichtung angeordnet ist, die eingerichtet ist, die Teiglinge 1 dem Spalt zwischen Kompressionswalze 40 und Unterwalze 31 zuzuführen. Eine alternative Ausführungsform der Anordnung der Kompressionswalze 40 und der Unterwalze 31 ist in Figur 3B gezeigt, wobei die Achse mindestens einer von Kompressionswalze 40 und Unterwalze 31 um mindestens den Betrag ihres Radius unterhalb der Ebene der Transporteinrichtung für Teiglinge 1 angeordnet ist, sodass Teiglinge 1 durch die Schwerkraft von der Transportvorrichtung in den Spalt zwischen Kompressionswalze 40 und Unterwalze 31 befördert werden. Diese Ausführungsform kann noch dadurch ergänzt werden, dass eine schiefe Ebene (nicht dargestellt), auf der Teiglinge 1 rutschen können, zwischen dem Ende des Transportbands und dem Spalt zwischen Kompressionswalze 40 und Unterwalze 31 angeordnet ist.

Überraschenderweise hat sich gezeigt, dass der im Stand der Technik zur Erzeugung der gewünschten Teigstruktur geforderte schnelle Preßvorgang mit einem Stempel durch Komprimieren der gebackenen Teiglinge zwischen einer Kompressionswalze und einer beabstandeten Kompressionsunterlage ersetzt werden kann.

Im weiteren Verfahrensablauf ist zur Herstellung von Pizzas vorgesehen, Einrichtungen zum gleichzeitigen oder nacheinander abfolgenden Auftragen von Beschichtungen, beispielsweise Saucenunterlagen, und zum Aufbringen von Fleisch- oder Wurstwaren, Gemüse- und Käsestückchen anzuordnen, besonders bevorzugt noch eine anschließende Kühl- oder Gefrierbahn zum kontinuierlichen Kühlen oder Gefrieren derselben.

Vorzugsweise bestehen die erfindungsgemäßen flachen Backwaren aus Hefeteig, der durch Mischen von Mehl, Wasser, wahlweise Zucker, Hefe und Salz und anschließendes Gehenlassen oder Fermentieren bei ca. 30 bis 41 °C bei einer relativen Luftfeuchtigkeit von ca. 60 bis 80% für 15 bis 45 min erhältlich ist.

Das Beschichten bzw. Belegen des Teiglings 1 mit festen und flüssigen Zutaten, beispielsweise mit Tomatensauce und Fleisch- und Wurstwaren, Gemüse- und/oder Käsestückchen zur Herstellung einer Pizza, erfolgt im Anschluss an das Backen und Pressen der gebackenen Teiglinge 1 zwischen der zweiten Unterlage 30 und der Kompressionswalze 40. Zur Garung von Zutaten, die auf dem gebackenen Teigling 1 angeordnet sind, kann daher ein nochmaliges Backen vorgesehen sein, wahlweise mit zwischenzeitlicher Kühlung oder Tiefkühlung.

Entsprechend können mit dem erfindungsgemäßen Verfahren flache Produkte hergestellt werden, die einen ausgebackenen oder teilweise vorgebackenen Teigboden aufweisen und wenigstens teilweise mit nicht gegarten Zutaten beschichtet bzw. belegt sind. Diese Backwaren können für den Transport gekühlt oder tiefgekühlt werden und vorzugsweise vor dem Verzehr nochmals gebacken werden, um den Teigboden zu erwärmen und die übrigen Zutaten zu garen.

### Bezugszeichenliste:

1 Teigling
2 Teigrest
10 erste Unterlage
20 Backunterlage
21 Ofen
30 zweites Transportband
31 Unterwalze
40 Kompressionswalze
41 zweite Walze
42 zweite Kompressionswalze
50 Kühleinrichtung
α, α' Winkel gegen Transportrichtung

## Patentansprüche

1. Verfahren zur kontinuierlichen Herstellung flacher Backwaren durch Backen eines vorgeformten flachen rohen Teiglings (1) und anschließende Druckbehandlung, **dadurch gekennzeichnet, dass**
a. der vorgeformte flache rohe Teigling (1) durch einen Ofen (21) transportiert und gebacken wird und
b. anschließend von einer drehbaren Kompressionswalze (40) gegen eine dazu beabstandete Kompressionsunterlage (30, 31) komprimiert wird.

2. Verfahren nach Anspruch 1, **dadurch gekennzeichnet, dass** die Achse der Kompressionswalze (40) senkrecht zur Bewegungsrichtung der Oberfläche der Kompressionsunterlage (30, 31) angeordnet ist.

3. Verfahren nach einem der voranstehenden Ansprüche, **dadurch gekennzeichnet, dass** die Achse der Kompressionswalze (40) in einem Winkel α von 45° bis 85° zur Bewegungsrichtung der Oberfläche der Kompressionsunterlage (30, 31) angeordnet ist.

4. Verfahren nach einem der voranstehenden Ansprüche, **dadurch gekennzeichnet, dass** die Kompressionswalze (40) mit einer von der Geschwindigkeit der Oberfläche der Kompressionsunterlage (30, 31) im Verhältnis von 1:1,05 bis 1:1,2 oder 1,05:1 bis 1,2:1 abweichenden Umfangsgeschwindigkeit antreibbar ist.

5. Verfahren nach einem der voranstehenden Ansprüche, **dadurch gekennzeichnet, dass** die Kompressionsunterlage (30, 31) ein zweites Transportband (30) ist.

6. Verfahren nach einem der Ansprüche 1 bis 4, **dadurch gekennzeichnet, dass** die Kompressionsunterlage (30, 31) eine Unterwalze (31) ist.

7. Verfahren nach einem der voranstehenden Ansprüche, **dadurch gekennzeichnet, dass** der vorgeformte flache rohe Teigling (1) durch Auswalzen eines Teigs auf einer ersten Unterlage (10), Ausstanzen entlang eines gewünschten Umfangs und Entfernen des ausgewalzten Teigs (2) außerhalb des gewünschten Umfangs geformt wird.

8. Verfahren nach einem der voranstehenden Ansprüche, **dadurch gekennzeichnet, dass** der vorgeformte flache rohe Teigling (1) vor dem Transportieren durch den Ofen (21) gekühlt oder eingefroren wird.

9. Verfahren nach einem der voranstehenden Ansprüche, **dadurch gekennzeichnet, dass** der Teigling (1) anschließend an das Komprimieren durch die Kompressionswalze (40) einseitig mit einer oder mehreren festen oder flüssigen Zutaten beschichtet bzw. belegt wird und anschließend gekühlt oder tiefgekühlt wird.

10. Verfahren nach einem der voranstehenden Ansprüche, **dadurch gekennzeichnet, dass** der Teigling (1) aus Hefeteig besteht.

11. Vorrichtung zur Durchführung eines Verfahrens nach einem der voranstehenden Ansprüche mit
einer Einrichtung zur Bereitstellung vorgeformter roher Teiglinge (1),
einem Ofen (21) mit einer zum kontinuierlichen Transport der Teiglinge (1) eingerichteten Backunterlage (20),
und einer nachfolgend angeordneten drehbaren Kompressionswalze (40) mit einer dazu beabstandeten Kompressionsunterlage (30, 31).

12. Vorrichtung nach Anspruch 11, **dadurch gekennzeichnet, dass** die Achse der Kompressionswalze (40) senkrecht zur Bewegungsrichtung der Oberfläche der Kompressionsunterlage (30, 31) angeordnet ist.

13. Vorrichtung nach einem der Ansprüche 11 oder 12, **dadurch gekennzeichnet, dass** die Achse der Kompressionswalze (40) in einem Winkel α von 45° bis 85° zur Bewegungsrichtung der Oberfläche der Kompressionsunterlage (30, 31) angeordnet ist.

14. Vorrichtung nach einem der Ansprüche 11 bis 13, **dadurch gekennzeichnet, dass** die Kompressionswalze (40) mit einer von der Geschwindigkeit der Oberfläche der Kompressionsunterlage (30, 31) im Verhältnis von 1:1,05 bis 1:1,2 oder 1,05:1 bis 1,2:1 abweichenden Umfangsgeschwindigkeit antreibbar ist.

15. Vorrichtung nach einem der Ansprüche 11 bis 14, **dadurch gekennzeichnet, dass** die Kompressionsunterlage (30, 31) ein zweites Transportband (30) ist.

16. Vorrichtung nach einem der Ansprüche 11 bis 14, **dadurch gekennzeichnet, dass** die Kompressionsunterlage (30, 31) eine Unterwalze (31) ist.

17. Vorrichtung nach einem der Anprüche 11 bis 16, **dadurch gekennzeichnet, dass** die Einrichtung zur Bereitstellung vorgeformter roher Teiglinge (1) eine Einrichtung zum Auswalzen von Teig auf einer ersten Unterlage (10) mit einer Einrichtung zum Ausstanzen von Teiglingen entlang eines gewünschten Umfangs auf der ersten Unterlage (10) und mit einer Einrichtung zur Entfernung des Teigs (2) außerhalb des Umfangs der Teiglinge (1) ist.

18. Vorrichtung nach einem der Ansprüche 11 bis 17, **dadurch gekennzeichnet, dass** zwischen der Einrichtung zur Bereitstellung vorgeformter roher Teiglinge (1) und dem Bereich der Backunterlage (20), die innerhalb des Ofens (21) angeordnet ist, eine Kühlvorrichtung (50) zur Kühlung der Teiglinge (1) angeordnet ist.

19. Vorrichtung nach einem der Ansprüche 11 bis 18, **dadurch gekennzeichnet, dass** die erste Unterlage (10) und die Backunterlage (20) von einem Transportband gebildet sind.

20. Vorrichtung nach einem der Ansprüche 11 bis 19, **dadurch gekennzeichnet, dass** die Backunterlage (20) und das zweite Transportband (30) von einem Transportband gebildet sind.

21. Vorrichtung nach einem der Ansprüche 11 bis 20, **dadurch kennzeichnet, dass** die Kompressionswalze (40) in einem Abstand von 2,8 bis 10 mm zur Kompressionsunterlage (30, 31) angeordnet ist.

22. Vorrichtung nach einem der Ansprüche 11 bis 21, **dadurch kennzeichnet, dass** eine Kühleinrichtung zwischen dem Ofen (21) und der Kompressionswalze (40) angeordnet ist.

## Claims

1. Method for continuous production of flat bakery products by baking a preshaped flat raw dough blank (1) and subsequent pressure treatment, **characterised in that**
a. the preshaped flat raw dough blank (1) is transported through an oven (21) and baked and
b. is subsequently compressed by a rotatable compression roller (40) against a compression base (30, 31) spaced therefrom.

2. Method according to claim, **characterised in that** the axis of the compression roller (40) is arranged perpendicularly to the direction of movement of the surface of the compression base (30. 31).

3. Method according to one of the preceding claims, **characterised in that** the axis of the compression roller (40) is arranged at an angle α of 45° to 85° relative to the direction of movement of the surface of the compression base (30, 31).

4. Method according to any one of the preceding claims, **characterised in that** the compression roller (40) is drivable at a circumferential speed differing from the speed of the surface of the compression base (30, 31) in the ratio of 1:1.05 to 1:1.2 or 1.05:1 to 1.2:1.

5. Method according to any one of the preceding claims, **characterised in that** the compression base (30, 31) is a second transport belt (30).

6. Method according to any one of claims 1 to 4, **characterised in that** the compression base (30, 31) is a lower roller (31).

7. Method according to any one of the preceding claims, **characterised in that** the preshaped flat raw dough blank (1) is shaped by rolling out a piece of dough on a first base (10), punching out along a desired circumference and removal of the rolled-out dough piece (2) outside the desired circumference.

8. Method according to any one of the preceding claims, **characterised in that** the preshaped flat raw dough blank (1) is cooled or frozen prior to transport through the oven (21).

9. Method according to any one of the preceding claims, **characterised in that** the dough blank (1) subsequently to compression by the compression roller (40) is coated or covered at one side by one or more solid or liquid ingredients and subsequently cooled or chilled.

10. Method according to any one of the preceding claims, **characterised in that** the dough blank (1) consists of yeast dough.

11. Device for performance of a method according to any one of the preceding claims, comprising equipment for preparation of preshaped raw dough blanks (1), an oven (21) with a baking base (20) equipped for continuous transport of the dough blanks (1) and a rotatable compression roller (40), which is arranged downstream, with a compression base (30, 31) spaced therefrom.

12. Device according to claim 11, **characterised in that** the axis of the compression roller (40) is arranged perpendicularly to the direction of movement of the surface of the compression base (30, 31).

13. Device according to one of claims 11 and 12, **characterised in that** the axis of the compression roller (40) is arranged at an angle α of 45° to 85° relative to the direction of movement of the surface of the compression base (30, 31).

14. Device according to any one of claims 11 to 13, **characterised in that** the compression roller (40) is drivable at a circumferential speed differing from the speed of the surface of the compression base (30, 31) in the ratio of 1:1.05 to 1:1.2 or 1.05:1 to 1.2:1.

15. Device according to any one of claims 11 to 14, **characterised in that** the compression base (30, 31) is a second transport belt (30).

16. Device according to any one of claims 11 to 14, **characterised in that** the compression base (30, 31) is a lower roller (31).

17. Device according to any one of claims 11 to 16, **characterised in that** the equipment for preparing preshaped raw dough blanks (1) is a device for rolling out dough on a first base (10) with a device for punching-out dough blanks along a desired circumference on the first base (10) and with a device for removal of the dough (2) outside the circumference of the dough blanks (1).

18. Device according to any one of claims 11 to 17, **characterised in that** a cooling device (50) for cooling the dough blanks (1) is arranged between the equipment for preparing preshaped raw dough blanks (1) and that region of the baking base (20) which is arranged within the oven (21).

19. Device according to any one of claims 11 to 18. **characterised in that** the first base (10) and the baking base (20) are formed by a transport belt.

20. Device according to any one of claims 11 to 19, **characterised in that** baking base (20) and the second transport belt (30) are formed by a transport belt.

21. Device according to any one of claims 11 to 20, **characterised in that** the compression roller (40) is arranged at a spacing of 2.8 to 10 millimetres from the compression base (30, 31).

22. Device according to any one of claims 11 to 21, **characterised in that** a cooling device is arranged between the oven (21) and the compression roller (40).

## Revendications

1. Procédé de fabrication, en continu, de produits de boulangerie de forme aplatie, par cuisson au four d'une pâte apprêtée crue (1), aplatie et préformée, et par traitement consécutif sous l'effet d'une pression,
**caractérisé par le fait que**
a. ladite pâte apprêtée crue (1), aplatie et préformée, est acheminée à travers un four (21) dans lequel elle est cuite, et
b. est comprimée au stade consécutif, par un rouleau rotatif de compression (40), contre une semelle de compression (30, 31) placée à distance dudit rouleau.

2. Procédé selon la revendication 1, **caractérisé par le fait que** l'axe du rouleau de compression (40) est situé perpendiculairement à la direction de mouvement de la surface de la semelle de compression (30, 31).

3. Procédé selon l'une des revendications précédentes, **caractérisé par le fait que** l'axe du rouleau de compression (40) décrit un angle α, de 45° à 85°, avec la direction du mouvement de la surface de la semelle de compression (30, 31).

4. Procédé selon l'une des revendications précédentes, **caractérisé par le fait que** le rouleau de compression (40) peut être entraîné à une vitesse périphérique qui diffère, selon un rapport de 1:1,05 à 1:1,2, ou de 1,05:1 à 1,2:1, de la vitesse de la surface de la semelle de compression (30, 31).

5. Procédé selon l'une des revendications précédentes, **caractérisé par le fait que** la semelle de compression (30, 31) est une seconde bande transporteuse (30).

6. Procédé selon l'une des revendications 1 à 4, **caractérisé par le fait que** la semelle de compression (30, 31) est un rouleau inférieur (31).

7. Procédé selon l'une des revendications précédentes, **caractérisé par le fait que** la pâte apprêtée crue (1), aplatie et préformée, est mise en forme par cylindrage d'une pâte sur une première semelle (10) ; par découpage le long d'un pourtour souhaité ; et par dissociation, à l'extérieur dudit pourtour souhaité, de la pâte (2) soumise à cylindrage.

8. Procédé selon l'une des revendications précédentes, **caractérisé par le fait que** la pâte apprêtée crue (1), aplatie et préformée, est réfrigérée ou congelée préalablement à l'acheminement à travers le four (21).

9. Procédé selon l'une des revendications précédentes, **caractérisé par le fait que**, dans l'enchaînement direct de la compression sous l'action du rouleau de compression (40), la pâte apprêtée (1) est respectivement revêtue ou garnie, sur une face, d'un ou de plusieurs ingrédient(s) solide(s) ou liquide(s), et est ensuite réfrigérée ou surgelée.

10. Procédé selon l'une des revendications précédentes, **caractérisé par le fait que** la pâte apprêtée (1) est constituée de levain.

11. Dispositif pour la mise en oeuvre d'un procédé selon l'une des revendications précédentes, comprenant
un système d'élaboration de pâtes apprêtées (1), crues et préformées,
un four (21), équipé d'une semelle de cuisson (20) agencée en vue de l'acheminement continu desdites pâtes apprêtées (1),
et un rouleau rotatif de compression (40), agencé en succession et associé à une semelle de compression (30, 31) placée à distance dudit rouleau.

12. Dispositif selon la revendication 11, **caractérisé par le fait que** l'axe du rouleau de compression (40) est situé perpendiculairement à la direction de mouvement de la surface de la semelle de compression (30, 31).

13. Dispositif selon l'une des revendications 11 ou 12, **caractérisé par le fait que** l'axe du rouleau de compression (40) décrit un angle α, de 45° à 85°, avec la direction du mouvement de la surface de la semelle de compression (30, 31).

14. Dispositif selon l'une des revendications 11 à 13, **caractérisé par le fait que** le rouleau de compression (40) peut être entraîné à une vitesse périphérique qui diffère, selon un rapport de 1:1,05 à 1:1,2, ou de 1,05:1 à 1,2:1, de la vitesse de la surface de la semelle de compression (30, 31).

15. Dispositif selon l'une des revendications 11 à 14, **caractérisé par** le fait oue la semelle de compression (30, 31) est une seconde bande transporteuse (30).

16. Dispositif selon l'une des revendications 11 à 14, **caractérisé par le fait que** la semelle de compression (30, 31) est un rouleau inférieur (31).

17. Dispositif selon l'une des revendications 11 à 16, **caractérisé par le fait que** le système d'élaboration de pâtes apprêtées (1), crues et préformées, est un système de cylindrage de pâte sur une première semelle (10), associé à un système de découpage de pâtes apprêtées le long d'un pourtour souhaité, sur ladite première semelle (10), et à un système de dissociation de la pâte (2) à l'extérieur du pourtour desdites pâtes apprêtées (1).

18. Dispositif selon l'une des revendications 11 à 17, **caractérisé par le fait qu'**un dispositif de réfrigération (50), destiné à réfrigérer les pâtes apprêtées (1), est situé entre le système d'élaboration de pâtes apprêtées (1), crues et préformées, et la région de la semelle de cuisson (20) qui se trouve à l'intérieur du four (21).

19. Dispositif selon l'une des revendications 11 à 18, **caractérisé par le fait que** la première semelle (10) et la semelle de cuisson (20) sont formées d'une bande convoyeuse.

20. Dispositif selon l'une des revendications 11 à 19, **caractérisé par le fait que** la semelle de cuisson (20) et la seconde bande transporteuse (30) sont formées d'une bande convoyeuse.

21. Dispositif selon l'une des revendications 11 à 20, **caractérisé par le fait que** le rouleau de compression (40) est espacé, de la semelle de compression (30, 31), d'une distance de 2,8 à 10 mm.

22. Dispositif selon l'une des revendications 11 à 21, **caractérisé par le fait qu'**un système de réfrigération est interposé entre le four (21) et le rouleau de compression (40).
